# EUROPEAN PATENT APPLICATION

(11) **EP 4 671 218 A1**
(43) Date of publication of application: **31.12.2025**
(21) Application number: 25184842.0
(22) Date of filing: 24.06.2025
(51) Int. Cl.: C03B 3/02, C03B 3/00, C03B 5/235

(54) **FURNACES FOR MELTING PARTICULATE MATERIALS**

(30) Priority: 26.06.2024 CN 202410843593
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Yan, Tao, Shanghai, 201108 (CN); Tsiava, Remi, 78350 Jouy-en-Josas (FR); Zhang, Ting, Shanghai, 201108 (CN); GU, Yuquan, Shanghai, 201108 (CN)
(74) Representative: Air Liquide

(57) **Abstract**

Furnace (11) for melting particulate materials configured with a furnace chamber (12), a feed hopper 14), a protrusion (18) and at least one burner (16), whereby the particulate materials fall along the protrusion (18) into a melting tank, and flue gas (19) generated by the at least one burner (16) flows upwardly along the protrusion (18), thereby preheating the particulate materials by means of the flue gas (19)

## Description

### Technical Field

The present invention relates to the field of melting and relates to melting devices for melting materials. More specifically, it relates to furnaces for melting particulate materials.

### Background Art

Rock wool (mineral wool or stone wool) is a fibrous material formed by spinning or stretching molten minerals or rocks. Rock wool can be used for insulation, filtration and soundproofing. Traditionally, the conventional method of making a melt of rock fiber or slag fiber is to use a shaft furnace. Through the combustion of fuel in the shaft furnace, the selfsupporting stack of the particulate materials is heated. The stack is progressively melted while being replenished from a top portion, such that the molten materials flow downward along the stack and are thereby discharged from a furnace bottom. A common furnace used for this purpose is the cupola furnace. The particulate materials described above are coarse crushed rock, pulverized stone or crushed slag, or briquettes formed from tiny particulate material. The dry particulate materials have a low heat transfer coefficient and radiation emission coefficient, making it a poor conductor of heat. Consequently, the accumulating particulate materials degrade the thermal energy transferred from the burner. Even if the surface of the stack is softened by melting, the interior of the stack remains unevenly heated.

The invention patent with the publication number US11254599B2 discloses exemplary apparatus for producing rock wool using a cupola furnace. Rock wool and cast iron are produced in the cupola furnace by melting, for example, basalt, blast furnace slag and coke. After separation of the slag and the cast iron containing most of the metals, a final step is performed to obtain the rock wool by bonding. This type of hot air combustion-aided melting technology uses hot air as the combustion-supporting gas, which is obtained by heat exchange between the exhaust gas of the cupola furnace and cold air. However, in this method, due to the low oxygen content in the air, the furnace heating rate is slow. Fuel combustion is not sufficient, resulting in high content of CO and other gases in the furnace. The produced rock wool fiber is short and thick, with poor flexibility and elasticity.

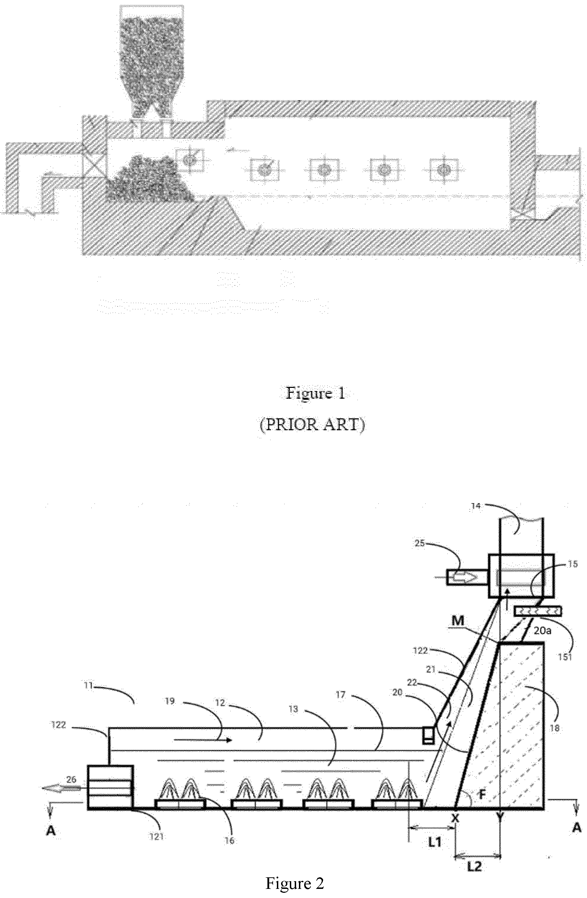

The Chinese invention patent with publication number CN110922028B discloses a furnace device for producing glass, basalt fiber or rock wool. A schematic diagram of the furnace device is shown in FIG. 1. The inner surface of the rear section of the bottom wall 304 of the furnace body 30 is raised upwardly as a whole to form the bottom of the pre-melting tank 34. The bottom of the pre-melting tank is protruded upwardly as a whole to form a tab 35 near the discharge side. A flue gas vent 31 is provided at the upper part of the rear side wall 302, and the flue gas vent 31 is higher than the tab 35. A pair of first combustion lances 50 is symmetrically provided above the pre-melting area near the discharge side of the pre-melting tank, and the two first combustion lances 50 are inserted into the furnace chamber from the left and right side walls of the furnace body respectively, while the nozzles of the two combustion lances are opposite to each other and both of them are directed to the pile of raw materials. Four pairs of second combustion lances 60 are inserted into the furnace chamber from the left and right side walls of the furnace body. The silos are provided at the top of the rear side of the furnace. The disadvantages of this type of furnace are high investment and very low efficiency of waste heat recovery. The contact time between the flue gas and the materials is very short. The dead zone of solidification formed by the natural accumulation of the materials is too large, which produces a large amount of waste material that cannot be melted.

One or more burner nozzles provided under the melt surface allow the burner flame and/or combustion products to pass through the melt. This setup is referred to as a submerged burner. An American Patent with the publish number of US10336640 B2 publishes a method and apparatus for melting solid raw materials using submerged burners. The melting chamber is equipped with at least five submerged burners, wherein each one has a burner central axis protruding from its outlet. The submerged burners are provided in a substantially annular combustion area. At the bottom of the melting chamber, neighboring burners are spaced apart and controlled such that simulations performed by computational fluid dynamics analysis show the generation of a substantially annular melt flow in the melt. The burners are provided at a suitable distance of about 250 to 750 mm from the side walls of said combustion chamber. This is to avoid the build-up of too large a layer of solidified material on the wall, too large a distance from the burner will produce undesirable melt flow and may be the cause of a dead zone with less melt mixed in the center of the furnace, and consequently lead to a reduced homogeneity of the melt.

The disadvantages of the above prior technologies are also very obvious. The flue gas from the furnace can reach temperatures up to 1350°C or more, and this portion of the flue gas takes away about 17 to 21% of the energy. Conventional technology adds a waste heat boiler or heat exchanger to the low temperature section of the flue. The flue gas in the high temperature section is not fully utilized, so the heat recovery efficiency of the flue gas is low. Coupled with the softening of materials such as rock wool at high temperatures, the area in the high temperature section is prone to clogging. Sometimes electric furnaces help increase the melting area, however, electric furnaces are easy to damage with a short service life and high maintenance costs.

### Summary of the Invention

It is a general object of the present disclosure to provide a furnace for melting particulate materials, wherein the furnace has a significantly higher flue gas heat recovery rate.

A first aspect of the present application provides a furnace for melting particulate materials, characterized in that the furnace is configured with:
a furnace chamber, the furnace chamber being provided with at least one side wall and a bottom wall, said at least one side wall and bottom wall enclosing a melting tank;
a feed hopper provided with a feed opening configured to supply particulate materials into the furnace chamber;
a protrusion projecting upwardly from the bottom wall of the furnace chamber and extending between the melting tank and the feed opening so that, when particulate materials are supplied via the feed opening into the furnace chamber, the particulate materials descend along a stacking surface of the protrusion into the melting tank; and
at least one burner configured to heat the particulate materials in the melting tank to form a melt and generate flue gas.

According to an exemplary embodiment of the present invention, the protrusion is shaped as a single- or multi-stage stepped configuration, a rectangular block, a trapezoidal block, a conical block or a truncated conical block.

According to an exemplary embodiment of the present invention, the top of the protrusion is located below the feed opening. The top of the protrusion may be in the form of an apical surface.

When the furnace is used to melt particulate materials, a melt having a melt surface is formed in the melting chamber. The height of the protrusion in the furnace is selected so that the protrusion extends upwardly above the melt surface. According to an exemplary embodiment of the present invention, the height of the protrusion in the vertical direction is from 1.3 to 6 times the set value of the melt depth in the melting tank, preferably from 1.5 to 5 times, and more preferably from 2.5 to 4.5 times.

According to an exemplary embodiment of the present invention, the at least one burner is positioned adjacent to or through the bottom wall of the furnace chamber. According to an advantageous embodiment of the present invention, the one or more burners is/are one or more submerged burners. When the furnace comprises two or more than two submerged burners, the two or more than two submerged burners may advantageously share a common cooling system and/or fuel and oxidant supply system.

According to an exemplary embodiment of the present invention, each submerged burner comprises a fuel passage and an oxidant passage, wherein said fuel passage and oxidant passage are constructed to respectively discharge the fuel and oxidant to the outside of the submerged burner to allow the mix of the fuel and oxidant at the outside. In other words, the submerged burner is what is known in the art as a post-mixed burner.

According to an exemplary embodiment of the present invention, the horizontal distance L1, measured along the bottom wall, between the stacking surface of the protrusion and the central axis of the burner nearest to the stacking wall is greater than 200 mm, and preferably ranging from 200 mm to 500 mm.

According to an exemplary embodiment of the present invention, the protrusion presents an apical surface. In that case, a line in a vertical plane connecting an endpoint M of the apical surface to the intersection of the stacking surface with the bottom wall forms an angle F with the horizontal plane in the range of degrees from 25° to 80°, preferably from 35° to 75°, and more preferably from 50° to 70°.

The furnace comprises an exhaust gas passage for the evacuation of the flue gas from the furnace chamber. According to an exemplary embodiment of the present invention, the exhaust gas passage is positioned so that, when the flue gas is evacuated via the exhaust gas passage, said flue gas flows upwards along the stacking surface towards the exhaust gas passage, thereby preheating the particulate materials descending along the stacking surface.

The furnace comprises a melt outlet for removing the melt from the furnace chamber.

According to a particular embodiment of the present invention, The furnace for melting the feed opening of the feed hopper, the protrusion and the exhaust passage are located at one end of the furnace, while the melt outlet is located at an opposite end of the furnace. In this manner, a melt flow direction is defined in the melting tank from the protrusion towards the melt outlet. Such an embodiment is particularly advantageous when the melting tank is a space enclosed by a bottom wall and four side walls, more specifically two longitudinal walls and two end walls..

According to a further embodiment of the invention, the melting tank is an annular space within the furnace chamber, whereby the melting tank surrounds the protrusion.

According to another embodiment of the invention, the protrusion is arranged circumferentially around the melting tank. In such a case, the furnace may present multiple circumferentially arranged feed openings, whereby said circumferentially arranged feed openings are preferably arranged at equal intervals.

A second aspect of the present application provides a method of melting particulate materials, said method comprising melting the particulate materials in the melting tank of a furnace according to the foregoing.

In the method of melting particulate materials according to the invention:
the particulate materials are supplied into the furnace chamber via the feed opening of the feed hopper;
the particulate materials descend along the stacking surface of the protrusion into the melting tank; and
the at least one burner is used to heat the particulate materials in the melting tank to form a melt with a melt surface in the melting tank and whereby the flue gas is generated.

According to an exemplary embodiment of the method, the height of the protrusion from the bottom wall in the vertical direction is from 1.3 to 6 times the melt depth in the melting tank, preferably from 1.5 to 5 times, and more preferably from 2.5 to 4.5 times, the melt depth being the distance in the vertical direction from the bottom wall to the melt surface.

Preferably a dead zone of the particulate materials is formed onto the stacking surface and a flow layer of the particulate materials is formed onto the dead zone.

According to an exemplary embodiment of the method, the particulate materials have a particle size ranging from 20 to 80 mm, preferably from 50 to 80 mm.

According to an exemplary embodiment of the method, the angle F described above is greater than the static angle of repose of the particulate materials.

According to an exemplary embodiment of the method, the flue gas is evacuated from the furnace chamber via an exhaust gas passage, whereby said flue gas flows upwards along the stacking surface towards the exhaust gas passage, thereby preheating the particulate materials descending along the stacking surface.

According to an advantageous embodiment, the particulate materials are at least partially melted while descending along the stacking surface of the protrusion into the melting tank.

A third aspect of the present application provides a method of preheating particulate materials using flue gas generated from a furnace, comprising the steps:
providing a furnace according to any one of the embodiments described above;
supplying the particulate materials into the furnace chamber via the feed opening of the feed hopper so that the particulate materials descend along the stacking surface of the protrusion into the melting tank;
generating flue gas with the at least one burner of the furnace; and
causing the generated flue gas to flow along the stacking surface in a flow direction opposite to the descending particulate materials thereby preheating and at least partially melting the descending particulate materials.

In the context of the present invention, the particulate materials may be particulate materials consisting of materials selected from the group consisting of basalt ore (also referred to as block rock), dolomite ore, glass, metals, resins and wastes.

In comparison with the prior arts, the technical solution provided in this application has the following advantages:
1. The protrusion of the furnace overall lift the pile formed by the continuously falling particulate materials, thus prolonging the contact time of the particulate materials with the flue gas.
2. The protrusion and melt outlet are arranged on opposite sides of the furnace, so the efficiency of flue gas preheating particulate materials and the heat recovery efficiency of the flue gas are significantly increased.
3. The process of preheating the particulate materials using flue gas starts from the hightemperature flue gas, and there is no need to cool down the flue gas, thereby reducing heat loss.
4. The particulate materials soften and melt during the preheating stage and enter into the melting tank, thereby accelerating the formation of the melt.
5. The flame and combustion products of the submerged burner are in direct contact with the heated medium, with long heat transfer time and full heat exchange, thereby improving energy efficiency and reducing CO₂ and NOₓ emissions.
6. The combination of submerged burners allows flexibility in meeting the requirements of various power ranges, reduces costs, and saves space by creating a more compact structure.

### Brief description of the drawings

The advantages and spirits of this application are further understood by the following detailed description of the invention and the drawings.
FIG. 1 is a schematic drawing of a furnace disclosed in a patent with the publication No. CN110922028B;
FIG. 2 is a schematic drawing of the furnace structure of Embodiment 1 provided in the present application;
FIG. 3 is a sectional drawing along line A-A in FIG. 2;
FIG. 4 is a schematic drawing of the furnace structure of Embodiment 1 provided in the present application, equipped with an exhaust gas passage;
FIG. 5 is a schematic drawing of the furnace structure of Embodiment 2 provided in the present application;
FIG. 6 is a sectional drawing along line B-B in FIG. 5;
FIG. 7 is a schematic drawing of a furnace structure of Embodiment 3 provided in the present application.

In the figure: 11 represents a furnace, 121 represents a bottom wall (of the furnace), 122 represents a side wall (of the furnace), 12 represents a furnace chamber, 13 represents a melting tank, 14 represents a feed hopper, 15 represents a feed opening, 151 represents a screw feeder, 16 represents a (submerged) burner, 17 represents a melt surface, 18 represents a protrusion, 19 represents flue gas, 20 represents a stacking surface of protrusion 18, 20a represents an an apical surface of protrusion 18, 21 represents a dead zone, 22 represents a flow layer, 23 represents an exhaust gas passage, 24 represents a silo, 25 represents a temperature regulating device, and 26 represents a melt outlet.

### Preferred embodiments of the invention

Specific embodiments of the present application are described in detail below in conjunction with the drawings. However, it should be understood that the present application is not limited to such embodiments described below, and that the technical ideas of the present application may be implemented in combination with other well-known technologies or other technologies that function in the same way as those well-known technologies.

In the following description of specific embodiments, in order to clearly show the structure and the way of working, it will be described with the help of a number of directional terms, but terms such as "front", "rear", "left", "right", "outer", "inner", "outward", "inward", "axial", "radial", etc. should be understood to be terms of convenience rather than restrictive terms.

In the following description of specific embodiments, it is to be understood that the terms "length", "width", "up", "down", "front", "back", "left", "right" , "vertical", "horizontal", " "top", "bottom", "inner ", "outside", etc, indicate orientations or positional relationships based on those shown in the drawings, and are intended only to facilitate a simplified description, and are not intended to indicate or imply that the device or element referred to must have a specific orientation, be constructed and operated in a particular orientation, and are therefore not to be construed as a limitation on the present application . Furthermore, when the first structure is described as being positioned "above" or "below" the second structure, this should be understood to mean that the first structure is positioned further or closer to a horizontal plane. Herein, the plane in which the bottom wall of the furnace is located is taken to be the horizontal plane.

In addition, the terms "first" and "second" are only used for descriptive purposes rather than limiting chronological order, quantity, or importance, and should not be construed as indicating or implying relative importance or implicitly specifying the number of the indicated technical features, but merely as a means of instead, it is merely for the purpose of distinguishing one technical feature from another technical feature in the present technical solution. As a result, the feature defined with "first" or "second" may expressly or implicitly include one or more such features. In the description of this application, "multiple" ("plurality") means two or more, unless otherwise expressly specified. Similarly, qualifiers such as "a" ("one") appearing herein are not meant to be quantitative, but rather to describe technical features not appearing in the preceding text. Similarly, unless modified by a specific quantity measure word, nouns herein should be regarded as including both singular and plural forms, i.e. the technical solution may include a single one of the technical feature concerned, but may also include a plurality of the technical feature. Similarly, modifiers such as "approximately" and "about" appearing before numerals herein usually include the numeral (present number), and their specific meanings thereof should be understood in context.

It should be understood that in the present application, "at least one (item)" means one or more, and "multiple" means two or more. The expression "and/or" is used to describe the associative relationship between associated objects, and indicates that three relationships may exist. For example, "A and/or B" may mean three situations: A alone is present, B alone is present, and A and B are both present, wherein A and B may be singular or plural. The symbol "/" generally indicates an "or" relationship between the associated objects before and after it. "At least one of the following items (pieces)" or a similar expression means any combination of these items, including a single item (piece) or any combination of multiple items (pieces). For example, at least one (item) of a, b or c can mean : a, b, c, "a and b", "a and c", "b and c", or "a and b and c", wherein a, b and c may be single or multiple.

For the purposes of this application, unless otherwise expressly provided and limited, the terms "mounting" , "connecting" , "joining" ,"fixing" and the like shall be broadly construed, for example, there may be a fixed connection, a removable connection, or a one-piece connection; there may be a mechanical connection or an electrical connection; there may be a direct connection or an indirect connection through an intermediary medium; there may be a connectivity within the two elements or an interactive relationship between the two elements. For those persons skilled in the art, the specific meanings of the above terms in this application may be understood on a case-by-case basis. "Fixedly coupled" or "fixedly connected" or "inactively coupled" is understood to mean that the connection between two or more structural members is not constructed to provide relative motion. An embodiment of a fixed connection is welded connection or bolted connection, and in some cases welds connection and screw connection. "Movably connected" or "movable" or "mobile connection" is understood to refer to a connection between two or more structural members that allows horizontal and/or vertical relative movement between the members under extreme dynamic loads. Such a connection does not normally allow movement under static or general dynamic loads (e.g., as imposed by light/moderate winds).

The terms "unit," "piece," "thing," and "module" described in this specification mean a unit for processing at least one function and operation and may be implemented by hardware components or software components and a combination thereof.

The terms "upstream" and "downstream" as described in this specification are defined with respect to the expected flow of fluid (e.g., melt in the furnace). The upstream end corresponds to the end closest to the inlet that introduces fluid into the furnace or the point in the furnace at which the fluid (for example the melt) is generated. The downstream end corresponds to the outlet or nozzle end at which the fluid leaves the furnace. Further, the location or area further away from the protrusion is downstream of the melt flow direction, while the location or area further close to the protrusion is upstream of the melt flow direction.

Unless clearly indicated to the contrary, each aspect or embodiment limited herein may be combined with any other one or more aspects or one or more embodiments. In particular, any feature noted as preferred or advantageous may be combined with any other feature noted as preferred or advantageous.

### Terms

A furnace is a kiln suitable and/or configured to melt particulate materials. The particulate materials may refer to any materials suitable for the manufacture of fibers, including but not limited to, glass fibers, mineral fibers, rock fibers, or slag fibers. The raw material for producing rock wools or basalt fibers is block rock. The melting of the block rock in the furnace is a process of absorbing heat from a cold solid state to softening and melting. The melting temperature of block rock is usually above 1000°C, so the energy consumption of the furnace is particularly high. Rock wool is a mineral made from natural ores such as basalt (or gabbro), and is made into products such as rock wool panels, rock wool felts, and rock wool pipe casings according to different applications. The particle size of the particulate materials used in the present application ranges from 0.05 mm to 80 mm, preferably the particle size ranges from 20 mm to 80 mm.

For stacked particulate material systems, the Angle of Repose is one of the most important parameters describing the fundamental properties of the particles in relation to their friction. Angle of Repose refers to a finite angle at which a particle stack can remain stationary relative to the horizontal plane. In practice, the angle of repose can take on a range of values before the stacking pile loses stability, i.e., there is a maximum stability angle before collapse occurs. A large amount of particulate materials dump on the horizontal surface and pile up into a cone. The internal angle of between the surface of the pile and the horizontal plane is the angle of repose. The angle of repose is related to particle density, particle surface area, particle shape and friction coefficient.

The angle between the inclined plane presented by the free pile and the stationary horizontal plane is the static angle of repose. When measuring the static angle of repose, due to the presence of fine particles in the loose particulate materials, when it piles up to a certain extent, under the action of gravity or impact force, a part of the loose pile is prone to collapse. The air encapsulated between the particles of the loose pile changes its fluidity, thereby the actual angle of repose is often lower than the theoretical value of the static angle of repose. When there are more large-size loose piles, less small-size materials and more air in the loose piles, the angle between the hypotenuse and the bottom edge of the loose pile collapse is often not equal to the theoretical value of the static angle of repose either.

Those persons skilled in the art are familiar with a variety of methods for measuring the static angle of repose, such as powder physical property testers. The discharge angle method, the injection angle method, the sliding angle and the shear box method are common methods of testing the angle of repose of powder.

As used herein, the term "fuel" refers to gaseous, liquid or solid fuels that can be used interchangeably or in combination. If it is at least partially in gaseous form, it can be introduced directly into the burner. If it is in liquid or solid form, it is introduced in the vicinity of the burner. The gaseous fuel may be natural gas (primarily methane), propane, hydrogen, syngas, biomass gas or any other hydrocarbon compound and/or sulfur-containing compound and/or nitrogen-containing compound. The solid or liquid fuel may be predominantly any compound in carbon and/or hydrocarbon and/or sulfur-containing form. The persons skilled in the art may determine the method of introducing the gaseous fuel, liquid fuel or solid fuel as desired, and the present invention is not intended to impose any limitation.

As used herein, the term "nozzle" refers to the component located at the end of the burner that ejects the fuel and oxidant to cause combustion thereof, either as a stand-alone component or as an integral component with other components.

As used herein, the terms "melt", "fuse" include the operations of heating a heated medium from a substantially solid state to a substantially liquid state. The composition of the heated medium may exist in any state between a substantially solid state and a substantially liquid state, including a substantially solid state and a substantially liquid state, wherein such state is between a solid particulate material and a melt with any extent of partial melting.

As used herein, the term "melt" or "molten material" refers to a substance obtained by melting that may comprise an inorganic constituent, a metal or an organic constituent, etc., which may be molten rockwool, molten glass, molten metals, molten resins, molten wastes, and the like.

As used herein, the term "preheating" refers to the heating of the particulate materials prior to its introduction into the melting tank.

As used herein, refractory materials defines as materials and products whose heat resistance corresponds to at least 1500°C (without excluding materials containing metallic components). This definition implies that the refractory materials should withstand at least 1500°C without softening or collapsing under their own weight according to the heat resistance test criteria. The surface in contact with the molten material or melt may be a combination of a water jacket assembly or a refractory material. The water cooling jacket assembly may be a pipeline network structure that allows the passage of a cooling fluid such as water. The protrusion may comprise a water cooling jacket assembly or refractory materials.

Specific embodiments of the present application are described in detail below in conjunction with the drawings. Embodiments may be found throughout the drawings in multiple views. Identical markings in the embodiments generally indicate the same or corresponding components. Accordingly, the descriptions of the embodiments are incorporated into one another, and descriptions of common subject matter of each embodiment are generally not repeated herein.

### Embodiment 1

FIG. 2 illustrates the structure schematic view of an exemplary furnace 11 of the present invention. The furnace 11 has a furnace chamber 12 for melting particulate materials. The furnace chamber 12 is configured with a melting tank 13, i.e. a space for melting, which is enclosed by at least a bottom wall 121 and a side wall 122. The body of the furnace 11 is made of refractory materials. The melting tank 13 is, for example, a substantially rectangular shaped space enclosed by a bottom wall 121 and four side walls 122.

The feed opening 15 of the one or more feed hoppers 14 is oriented toward the bottom wall 121 of the furnace 11. The particulate materials fall through the feed opening 15. At this point the feed opening 15 and the melt outlet 26 of the furnace 11 are located on opposite sides of the furnace respectively. A feeding system such as a feed hopper 14 is used, which is well known to the persons skilled in the art. In this embodiment, basalt ore and dolomite ore with a particle size ranging from 20 to 80 mm (preferably 50 to 80 mm) are selected as examples. The centers of blocks with a larger particle size are very difficult to heat. If the particulate materials also include some powdered particulate materials with a particle size in the range of 0.05 to 2 mm, a screw feeder 151 can be used in conjunction with the feeding. The screw feeder 151 may be mounted horizontally to one side of the feed opening 15, and this portion of the powdered materials is supplied into the particulate materials falling through the feed opening 15 and mixed therein, moving together downstream.

At least one submerged burner 16 arranged on the bottom wall 121 provides thermal energy. The thermal energy transfers from the submerged burner flame to the melt surface 17. The submerged burner 16 extends upwardly from the bottom wall 121 into the melt. The fuel and oxidant introduced from a nozzle at the end of the submerged burner 16 burned to produce flue gas 19. The submerged burner preferably ejects the combustion products into the melt at high pressure. The flue gas 19 rises through the melting tank 13, and the particulate materials enter the melting tank 13 in a direction opposite to the escaping flue gas 19. The particulate materials are thus preheated and at least partially melted. For a given submerged burner 16 design, the persons skilled in the art need to adjust the distance between the burners 16, between the burners and the side walls 122 and between the burners 16 and the protrusion 18. At the bottom of the furnace, adjacent burners 16 are spaced apart and controlled. A plurality of submerged burners 16 may share a cooling system and/or a fuel and oxidant supply system (not shown). The submerged burners 16 may include a fuel passage and an oxidant passage (not shown in the illustrations). Said fuel passage and oxidant passage are constructed to discharge the fuel and oxidant respectively to allow mixing of the fuel and oxidant to occur. The flame direction of the submerged burner 16 mounted on the bottom wall 121 of the furnace is upward. Exemplarily, the angle between the the flame direction and the vertical direction lies between 0 and 10°.

Advantageously, submerged burners 16 can use hydrogen as the fuel. Hydrogen has many advantages as a clean energy source. Since the submerged combustion conducts heat transfer and heat convection by direct contact, the heat of the hydrogen flame is fully transferred in the heated materials, thus enabling better utilization of the heat energy of hydrogen combustion. Hydrogen as a fuel for submerged burners 16 also has the following advantages: water is the only product of its oxidation combustion, thus reducing carbon dioxide emissions from the combustion process; when hydrogen is used as a fuel, the partial pressure of the gaseous water generated is different from that of the other gases present in the glass, which makes it easier for the bubbles of these gases to be absorbed and merged to form a large bubble to be discharged; in addition, lots of OH⁻ ions produced by hydrogen combustion reduce the surface tension of the glass liquid abound bubbles of various sizes, and can also make it easier for the gas in the bubbles to escape from the melt. The above advantages of hydrogen make it suitable for use as a fuel in submerged burners 16 in material melting.

Combined with the conditions of particle size, composition, moisture, etc. of the basalt particles in this embodiment, the theoretical value of the static angle of repose is 35°. In order to improve the heat exchange efficiency between the pile formed by the particles and the flue gas 19, a protrusion 18 is particularly provided. The protrusion 18 is proximate to one of the side walls 122 of the furnace chamber 12, which extends between the feed opening 15 and the melting tank 13. Preferably, the protrusion 18 and the melt outlet 26 of the furnace 11 are located on opposite sides of the furnace 11. The protrusion 18 is capable of lifting the pile formed by the continuously falling particulate materials, resulting in an increased heat exchange area between the particulate materials and the flue gas 19, and an increased effective heat transfer from the flue gas 19 to the particulate materials. The presence of conventional dead zones can make heat exchange between the flue gas 19 and the particulate materials particularly difficult. It is therefore a further aim of the present application to utilize the temperature of the flue gas 19 to preheat more particulate materials, which undergo melt softening and eventually fall into the melting tank 13, thereby accelerating the formation of the melt in the melting tank 13. The protrusion 18 can withstand the pressure of the continuously descending particulate materials above it, thereby prolonging the contact time of the particulate materials with the flue gas 19. The protrusion 18 defines a stacking surface 20 in contact with the particulate materials. A dead zone 21 of the particulate materials is formed onto the stacking surface 20 and a flow layer 22 of the particulate materials is formed onto the dead zone 21. The dead zone 21 is a retention layer of the particulate materials, wherein the particulate materials are mostly in an unmelted solid state. The flow layer 22 is the mobile layer of the particulate materials, wherein the particulate materials are in a transitional state comprising both solid and liquid states after a certain extent of softening. Other objectives are to minimize the risk of clogging of the feed stream or blockage of the flue gas 19 due to overheated melting or high speed softening of the particulate materials.

This embodiment does not intend to limit the specific shape of the protrusion 18, which may be, for example, a single- or multi-gradation stepped configuration , a rectangular block, a trapezoidal block, a conical block, a truncated conical block or other pile-like structure. The top of the protrusion 18 is located below the feed opening 15 and above the melt surface 17.

The height of the protrusion 18 in the vertical direction is from 1.3 to 6 times the set value of the melt depth in the melting tank, preferably from 1.5 to 5 times, and more preferably from 2.5 to 4.5 times. The set value of the melt depth is considered a target melt height after stable operation of the furnace, i.e. the height from the melt surface 17 to the bottom wall 121 of the furnace.

The melt can be removed continuously or in batches. The melt outlet 26 is provided near the bottom wall 121 of one of the short side walls 122 (also referred to as end walls) of this rectangular melting tank. In the case of loading the particulate materials closer to a side wall 122 of the furnace 11, the melt outlet 26 for the melt is preferably arranged at a position on the opposite side to the feed opening 15. In case of non-continuous discharge of the melt, the opening and closing of the melt outlet can be controlled, for example by means of a ceramic piston. As the particulate materials continue to melt, the melt forms a melt surface 17 within the melting tank13, which may be a top surface of the melt. The flow direction of the formed melt is shown in FIG. 2 as a generally right-to-left direction. Accordingly, the location or area to the left, near the melt outlet 26 in FIG. 2 is downstream of the melt flow direction, while the location or area to the right, away from the melt outlet 26 is upstream of the melt flow direction.

As shown in FIG. 2, downstream along the melt flow direction, the leftmost endpoint of the protrusion 18 is marked as X. The horizontal distance L1 between X and the center axis of the nearest submerged burner 16 is greater than 200 mm, and preferably 200 to 500 mm. If L1 is too small, the bubbles generated by the submerged burner 16 will impact the particulate materials descending along the protrusion 18, scrubbing the walls of the protrusion 18 and affecting the effective melting of the particulate materials and the furnace life. If L1 is too large, the heat exchange efficiency between the flue gas 19 and the particulate materials decreases and the dead zone area is larger.

An example is the protrusion 18 having a trapezoidal cross-section illustrated in FIG. 2. Downstream along the melt flow direction, the line connecting the leftmost endpoint M of the apical surface 20a of the protrusion 18 and X forms an acute angle (F) with the horizontal plane with a degree greater than the static angle of repose of the particulate materials, e.g. in the range of 25° to 80°, preferably in the range of 35°to 75°, and more preferably in the range of 50°to 70°. Y is the endpoint projected onto the horizontal plane of the feed opening 15 along the more downstream direction (i.e. the leftmost), and the horizontal distance L2 between X and Y ranges from 200 to 1,000 mm. The distance between X and Y ensures that the descending particulate materials are more inclined to descend along the surface of the protrusion 18 and less likely to accumulate on the already softened particulate materials.

The technical solution of this embodiment is to preheat the particulate materials by using flue gas 19 generated by combustion in a submerged burner 16 of a furnace 11. The temperature of the flue gas 19 leaving the melt is related to the depth of the melt in the furnace 11, the flame characteristics of the submerged burner 16, the type of fuel and oxidant, and the physical properties of the melt.

As an exemplary case, the furnace 11 in this embodiment has a vertical height of about 1300 mm from the furnace crown to the bottom wall 121 of the furnace 11. The bottom wall 121 of the furnace 11 is equipped with eight (8) multi-nozzle (12 nozzles) submerged burners 16, wherein the power of each nozzle/burner 16 is not more than 80 KW. Take for example, a production line in which the furnace 11 has a discharge capacity of 120 tons/day. After the furnace 11 has stabilized, the melt depth reaches a set value of 650 mm, at which time the melt surface 17 in the melting tank 13 of the furnace 11 stabilizes. The vertical distance from the feed opening 15 to the melt surface 17 is about 4 meters. The maximum height of the protrusion 18 in the vertical direction is 3.25 meters.

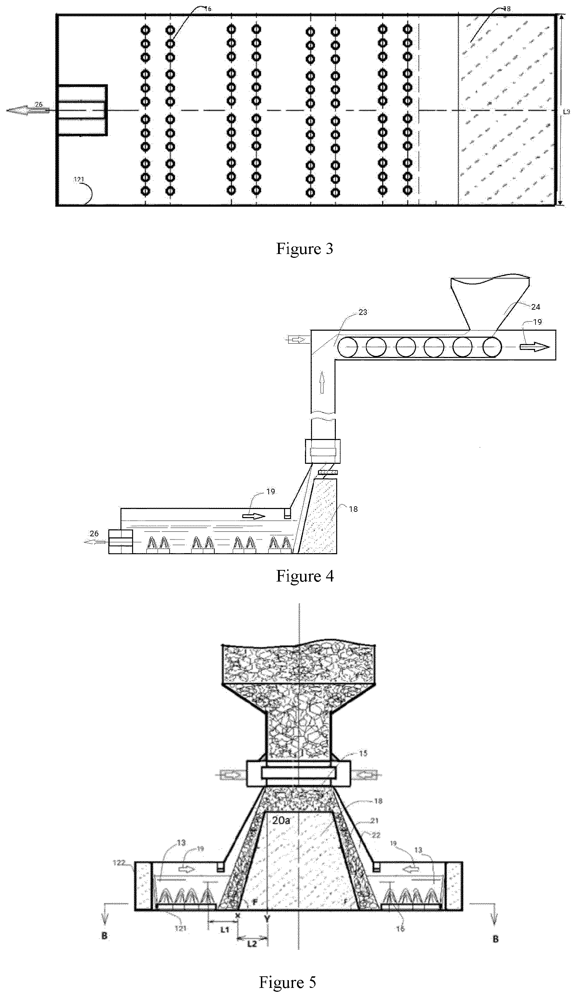

FIG. 3 shows a cross-sectional view along line A-A of FIG. 2. The cross-sectional width of the feed opening 15 is approximately 70% to 100% of the width L3 of the sidewall 122 of the charging end of the furnace 11.

FIG. 4 further shows a schematic view of the rectangular furnace 11 of FIG. 2 equipped with an exhaust gas channel 23. The flue gas exhaust leaves the furnace 11 and continues into the exhaust gas passage 23. The particulate materials conveyed by the silo 24 connected to the feed hopper 14 initially exchanges heat with this portion of the flue gas exhaust, improving flue gas utilization.

The flue gas 19 generated from the submerged burner 16 escapes from the melt at 1500°C and reaches a temperature of about 1350°C to 1200°C above the melt surface 17. In this embodiment, the flue gas 19 can be categorized by temperature into a high temperature flue gas (temperature higher than 800°C), a medium temperature flue gas (500~800°C), and a low temperature flue gas (lower than 500°C, preferably lower than 300°C, and more preferably than 150°C). In this embodiment, the flue gas 19 in the melting tank 13 and in contact with the descending particulate materials via the protrusion 18 is mainly the high temperature flue gas. The flue gas 19 rising up to the vicinity of the feed opening 15 is mainly a medium temperature flue gas. The flue gas 19 discharged through the exhaust gas passage 23 is mainly low temperature flue gas. The low temperature flue gas directly heats the particulate materials from the silo 24 and the conveyor belt or the like that transports the particulate materials. Devices for regulating the flue gas flow, such as exhaust fans, are well known to those persons skilled in the art to control the residence time of the flue gas in the furnace and will not be discussed herein. A temperature regulating device 25 is provided on one side of the feed opening 15 to control the temperature at which the flue gas exhaust enters the exhaust gas passage 23 to prevent overheating of the feed hopper 14.

Compared to the case of melting the same particulate materials in a furnace with a direct submerged burner, the heat loss can be reduced from about 21% to 5%~ 13%, when the temperature of the finally escaped flue gas exhaust drops below 150°C.

### Embodiment 2

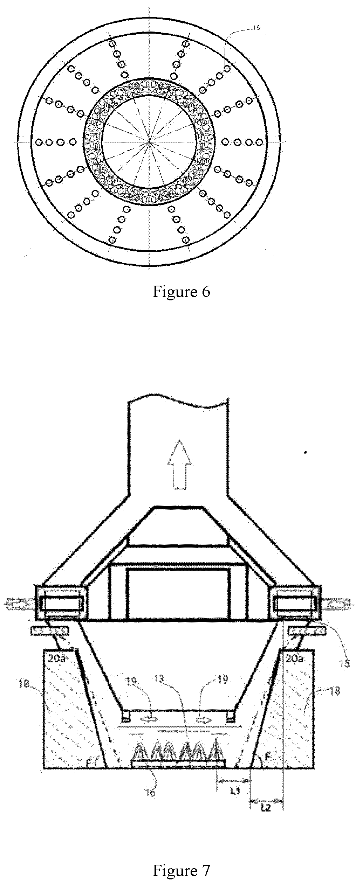

FIG. 5 illustrates a schematic view of another type of furnace 11 of the present application. FIG. 6 then illustrates a sectional view along line B-B in FIG. 5. The furnace chamber 12 comprises a melting tank 13 as known to those persons skilled in the art. The melting tank 13 is an annular space surrounded by a bottom wall 121 and enclosing side wall 122, while at least one feed opening 15 is located in the center of the furnace 11.

The protrusion 18 is positioned within the annular furnace 11 and preferably may be located in the center of the annular furnace 11. Flue gas 19 generated by the at least one submerged burner 16 mounted in the bottom wall 121 of the furnace 11 flows upwards and around the circumference, in reverse contact with the falling particulate materials. The submerged burners 16 may be provided within a substantially circular combustion area. Further, each submerged burner 16 may be provided at equal intervals around the circumference of the furnace 11.

### Embodiment 3

FIG. 7 illustrates a schematic view of yet another furnace 11 of the present application. The protrusion 18 is distributed around the circumference and defines melting tank 13 together with bottom wall 121. The melting tank 13 is positioned in the center of the furnace 11 where a plurality of submerged burners 16 are provided. Flue gas 19 flows upwardly and around the circumference as a whole. At least one feed opening 15 may be distributed along the circumference of the annular space. Further, when multiple feed openings 15 are provided, said feed openings 15 may be equally spaced around the circumference of the furnace. The particulate materials enter the melting tank 13 downwardly and in all directions through feed openings 15.

The present invention makes improvements to the melting device for particulate materials of a certain range of particle sizes, in order to further eliminate the problem of particles becoming stuck and unable to continue falling due to the melting, softening and sticky of the materials. The design of the protrusion lifts the material pile, the contact area between the particulate materials and the flue gas in the high temperature section is increased, and the heat loss is greatly reduced. The nozzle of the submerged burner is submerged in the heated medium. Various power ranges can be achieved by flexible combinations of submerged burners. The furnace fully meets one or more of the previously stated objectives.

What is described in this specification is only a better specific embodiment of the present application, and the above embodiments are only used to illustrate the technical solutions of the present application rather than to limit the present application. Any technical solution that can be obtained by logical analysis, reasoning or limited experimentation by the persons skilled in the art according to the concept of this application shall be within the scope of this application.

## Claims

1. A furnace (11) for melting particulate materials, **characterized in that** the furnace (11) is configured with:
a furnace chamber (12), the furnace chamber (12) being provided with at least one side wall (122) and a bottom wall (121), said at least one side wall (122) and bottom wall (121) enclosing a melting tank (13);
a feed hopper (14) provided with a feed opening (15) configured to supply particulate materials into the furnace chamber (12);
a protrusion (18) projecting upwardly from the bottom wall (121) of the furnace chamber (12) and extending between the melting tank (13) and the feed opening (15) so that, when particulate materials are supplied via the feed opening (15) into the furnace chamber (12), the particulate materials descend along a stacking surface (20) of the protrusion (18) into the melting tank (13); and
at least one burner (16) configured to heat the particulate materials in the melting tank (13) to form a melt and generate flue gas (19).

2. The furnace (11) for melting particulate materials as claimed in claim 1, **characterized in that** the protrusion (18) is shaped as a single- or multi-stage stepped configuration, a rectangular block, a trapezoidal block, a conical block or a truncated conical block.

3. The furnace (11) for melting particulate materials as claimed in either one of the preceding claims, **characterized in that** the top of the protrusion (18) is located below the feed opening (15).

4. The furnace (11) for melting particulate materials as claimed in any one of the preceding claims, **characterized in that** the at least one burner (16) is positioned adjacent to or through the bottom wall (121) of the furnace chamber (12), the at least one burner (16) being preferably a submerged burner.

5. The furnace (11) for melting particulate materials as claimed in any one of the preceding claims, **characterized in that** the horizontal distance L1, measured along the bottom wall (121), between the stacking surface (20) of the protrusion (18) and the central axis of the burner (16) nearest to the stacking wall (20) is greater than 200 mm, and preferably ranging from 200mm to 500 mm.

6. The furnace (11) for melting particulate materials as claimed in any one of the preceding claims, **characterized in that** the protrusion (18) presents an apical surface (20a) and **in that** a line in a vertical plane connecting an endpoint M of the apical surface (20a) to the intersection of the stacking surface (20) with the bottom wall (121) forms an angle (F) with the horizontal plane in the range of degrees from 25° to 80°, preferably from 35° to 75°, and more preferably from 50° to 70°.

7. The furnace (11) for melting particulate materials as claimed in any one of the preceding claims, **characterized in that** the furnace comprises an exhaust gas passage (23) for the evacuation of the flue gas (19) from the furnace chamber (12) and positioned so that, when the flue gas (19) is evacuated via the exhaust gas passage (23), said flue gas (19) flows upwards along the stacking surface (20) towards the exhaust gas passage (23), thereby preheating the particulate materials descending along the stacking surface (20).

8. The furnace (11) for melting particulate materials as claimed in claim 7, **characterized in that** the feed opening (15), the protrusion (18) and the exhaust passage are located at one end of the furnace, whereby the furnace further comprises a melt outlet (26) at an opposite end of the furnace, so as to define a melt flow direction in the melting tank (13) from the protrusion (18) towards the melt outlet (26).

9. The furnace (11) for melting particulate materials as claimed in any one of claims 1 to 7, **characterized in that** the melting tank (13) is an annular space within the furnace chamber (12) surrounding the protrusion (18).

10. The furnace (11) for melting particulate materials as claimed in any one of claims 1 to 7, **characterized in that** the protrusion (18) is arranged circumferentially around the melting tank (13).

11. A method of melting particulate materials by means of a furnace (11) according to any one of the preceding claims, method whereby:
the particulate materials are supplied into the furnace chamber (12) via the feed opening (15) of the feed hopper (14);
the particulate materials descend along the stacking surface (20) of the protrusion (18) into the melting tank (13); and
the at least one burner (16) is used to heat the particulate materials in the melting tank (13) to form a melt with a melt surface (17) in the melting tank (13) and whereby the flue gas (19) is generated.

12. The method of claim 11, **characterized in that** the furnace (11) comprises an exhaust gas passage (23) via which the flue gas (19) is evacuated from the furnace chamber (12) and whereby said flue gas (19) flows upwards along the stacking surface (20) towards the exhaust gas passage (23), thereby preheating the particulate materials descending along the stacking surface (20).

13. The method according to claim 11 or 12, **characterized in that** a dead zone (21) of the particulate materials is formed onto the stacking surface (20) and a flow layer (22) of the particulate materials is formed onto the dead zone (21).

14. The method according to any one of claims 11 to 13, **characterized in that** the top of the protrusion (18) is located below the feed opening (15) and above the level of the melt surface (17), whereby the height of the protrusion (18) in the vertical direction from the bottom wall (121) is from 1.3 to 6 times the melt depth in the melting tank (13) from the bottom wall (121) to the melt surface (17).

15. The method according to any one of claims 11 to 14, whereby the particulate materials are at least partially melted while descending along the stacking surface (20) of the protrusion (18) into the melting tank (13).

16. A method of preheating particulate materials, the method comprising the steps of:
providing a furnace (11) according to any one of 1 to 10;
supplying the particulate materials into the furnace chamber (12) via the feed opening (15) of the feed hopper (14) so that the particulate materials descend along the stacking surface (20) of the protrusion (18) into the melting tank (13);
generating flue gas (19) with the at least one burner (16) of the furnace (11); and
causing the generated flue gas (19) to flow along the stacking surface (20) in a flow direction opposite to the descending particulate materials thereby preheating and at least partially melting the descending particulate materials.
